# EUROPÄISCHE PATENTSCHRIFT

(11) **EP 3 156 661 B1**
(45) Veröffentlichungstag und Bekanntmachung des Hinweises auf die Patenterteilung: **06.12.2023**
(21) Anmeldenummer: 15189914.3
(22) Anmeldetag: 15.10.2015
(51) Int. Cl.: F04D 29/42, F04D 15/00, F04D 13/16, F16K 15/06, F16K 27/02, F04D 13/06, F04D 29/62, F04D 1/06

(54) **HAUSWASSERWERK ODER PUMPE MIT EINEM RÜCKSCHLAGVENTIL**
DOMESTIC WATER SYSTEM OR PUMP WITH A CHECK VALVE
INSTALLATION D'EAU DOMESTIQUE OU POMPE AVEC CLAPET ANTI-RETOUR

(43) Veröffentlichungstag der Anmeldung: 19.04.2017
(73) Patentinhaber: Grundfos Holding A/S, 8850 Bjerringbro (DK)
(72) Erfinder: Sierakowski-Sørensen, Janus Lukas, 8382 Hinnerup (DK)
(74) Vertreter: Patentanwälte Vollmann Hemmer Lindfeld Partnerschaft mbB

(56) Entgegenhaltungen:
- EP-A1- 2 211 057
- EP-A2- 0 992 687
- GB-A- 347 563
- GB-A- 350 836
- US-A- 4 986 502
- US-A1- 2005 232 796

## Beschreibung

Die Erfindung betrifft ein Hauswasserwerk oder eine Pumpe mit einem Rückschlagventil, welches in einem Strömungskanal des Hauswasserwerks oder der Pumpe oder eines Ventilgehäuses eingegliedert ist und welches einen bewegbar innerhalb des Kanals gelagerte Dichtkörper aufweist, der in einer ersten Stellung, welche die Schließstellung bildet, den Kanal absperrt, und in einer zweiten Stellung, welche die geöffnete Stellung bildet, den Kanal freigibt.

Rückschlagventile zählen in zahlreichen Konstruktionsvarianten zum Stand der Technik, sie werden dort eingesetzt, wo ein Durchfluss nur in einer bestimmten Richtung gewünscht ist, um Flüssigkeit in einem Kanalsystem oder Gefäß zu halten oder zu anderen Zwecken.

Bei Hauswasserwerken oder Pumpen wird ein Rückschlageventil typischerweise druckseitig der Pumpe vorgesehen um sicherzustellen, dass nach Abschalten der Pumpe druckseitig der Systemdruck gehalten wird und nicht Flüssigkeit durch die Pumpe zurückfließt. Andererseits ist es bei Hauswasserwerken, die mit Kreiselpumpen betrieben werden, aber auch bei anderen Kreiselpumpen, wenn diese quasi selbstansaugend arbeiten sollen, erforderlich, diese einerseits entsprechend konstruktiv auszulegen und andererseits eine verschließbare Einfüllöffnung vorzusehen, um sicherzustellen, dass bei der Erstinbetriebnahme sich Flüssigkeit in der Pumpe befindet. Da das Rückschlagventil einen solchen Rückfluss in die Pumpe verhindert, ist eine verschließbare Einfüllöffnung in Strömungsrichtung vor dem Rückschlagventil vorzusehen.

Ein bekanntes Hauswasserwerk dieser Art wird von der Anmelderin unter der Bezeichnung Grundfos MQ vertrieben. Diese Konstruktion hat sich in der Praxis bestens bewährt, jedoch weist sie die oben beschriebenen Ausgestaltungen und die dadurch bedingten Nachteile auf. So ist das Rückschlagventil vergleichsweise aufwendig aus- und einzubauen. Dabei ist dafür Sorge zu tragen, dass druckseitig kein Druck mehr ansteht, um einen unkontrollierten Druckverlust beim Ausbau des Rückschlagventils und das damit stets einhergehende Gefahrenpotential zu vermeiden.

EP 0 992 687 A2 offenbart ein Hauswasserwerk oder eine Pumpe mit den Merkmalen der Präambel von Anspruch 1. GB 350 836 A offenbart ein Rückschlagventil für eine Pumpe oder ein Hauswasserwerk mit einem einen Tragkörper umfassenden Dichtkörper. Der Tragkörper umfasst eine umlaufende Nut, in der ein Dichtring sitzt. Zudem ist der Tragkörper über den Dichtsitz hinaus verlängert und bildet in Verbindung mit einem Kanal eines Ventilgehäuses eine Führung. EP 2 211 057 A1 offenbart ebenfalls ein Rückschlagventil für ein Hauswasserwerk mit einem Dichtkörper, der an einer Halterung lösbar festgelegt ist. US 4 986 502 A offenbart ein Ventil mit einem Verschlussstopfen, in dem ein Überstromkanal ausgebildet ist.

Vor diesem Hintergrund liegt der Erfindung die Aufgabe zugrunde, ein Rückschlagventil für ein Hauswasserwerk oder für eine Pumpe dahingehend zu verbessern, dass die Zugänglichkeit und die Handhabung bei Montage und Demontage verbessert werden kann. Im Weiteren soll ein mit solch einem Rückschlagventil ausgestattetes Hauswasserwerk in Aufbau und Funktion verbessert werden.

Diese Aufgabe wird gemäß der Erfindung durch ein Hauswasserwerk oder eine Pumpe mit den in Anspruch 1 angegebenen Merkmalen gelöst. Vorteilhafte Ausgestaltungen ergeben sich aus den Unteransprüchen.

Das erfindungsgemäße Hauswasserwerk bzw. die erfindungsgemäße Pumpe umfasst ein in dem Strömungskanal des Hauswasserwerks oder der Pumpe eingegliedertes Rückschlagventil. Das Rückschlagventil weist einen bewegbaren innerhalb des Kanals gelagerten Dichtkörper auf, der in einer ersten Stellung, welche die Schließstellung bildet, den Kanal absperrt, und welcher in einer zweiten Stellung, die die geöffnete Stellung bildet, den Kanal freigibt. Erfindungsgemäß ist der Dichtkörper an einer Halterung bewegbar angeordnet, die einen Verschlusskörper in Form eines Verschlussstopfens aufweist, mit der die Halterung in einer Gehäuseöffnung lösbar befestigt ist.

I Verschlusskörper im Sinne der vorliegenden Erfindung ist ein stopfenartiger Körper, der in einer Gehäuseöffnung festgelegt ist.

Grundgedanke der erfindungsgemäßen Lösung ist es, das Rückschlagventil nicht wie sonst üblich in einem Kanalabschnitt einzugliedern, sondern Rückschlagventil, Gehäuseöffnung und Verschlusskörper konstruktiv und funktionell miteinander zu verbinden. Dabei hat die erfindungsgemäße Lösung den konstruktiven Vorteil, dass das Rückschlagventil durch einfaches Entfernen des Verschlusskörpers kontrollierbar und austauschbar ist, zumindest der im Falle des Verschleißes üblicherweise auszutauschende Teil, nämlich der Dichtkörper bzw. die hierfür vorgesehene Dichtung.

Besonders vorteilhaft ist es dabei, wenn der Verschlusskörper in Strömungsrichtung ausgangsseitig des Rückschlagventils angeordnet ist, da dann mit Öffnen des Verschlusskörpers gezielt der üblicherweise dort anstehende Druck abgebaut werden kann sowie darüber hinaus nach Entfernen des Dichtkörpers zusammen mit der Halterung über diese Gehäuseöffnung Flüssigkeit eingefüllt werden kann, wie dies beispielsweise zur Erzeugung eines Selbstansaugungseffektes bei Pumpen aber insbesondere auch bei einem Hauswasserwerk erforderlich ist. Durch diese Anordnung kann die sonst übliche Befüllöffnung, die sonst in Strömungsrichtung vor dem Rückschlagventil liegen muss, entfallen. Bei geeigneter Ausgestaltung ergeben sich darüber hinaus weitere Vorteile, die weiter unten noch beschrieben sind.

Die Halterung weist an einem Ende den Verschlusskörper in Form eines Verschlussstopfens auf und am anderen Ende den Dichtkörper. Dann ergibt sich ein kompaktes Bauteil, welches patronenartig in das Gehäuse eingegliedert werden kann, wobei bei geeigneter Ausgestaltung mit dem Einsetzen und Festlegen des Verschlusskörpers in oder an der Gehäuseöffnung gleichzeitig auch der Dichtkörper in seine bestimmungsgemäße Position im Rückschlagventil gebracht wird.

Hierzu ist es besonders vorteilhaft, wenn der Verschlusskörper mittels einer Bajonett- oder Gewindeverbindung in bzw. an der Gehäuseöffnung befestigbar ist. Dabei ist die Gewinde- oder Bajonettausbildung vorteilhaft mehrstufig, so dass in einer ersten Stufe das Rückschlagventil geöffnet und ein Bypass zwischen Verschlusskörper und Gehäuseöffnung gebildet ist, in einer zweiten Stufe das Rückschlagventil geschlossen, das heißt in der bestimmungsgemäßen Position ist, und der Bypass weiter besteht und erst in einer dritten Stufe der Verschlusskörper dichtend die Gehäuseöffnung abschließt.

Als Dichtung zwischen Gehäuseöffnung und Verschlussstopfen wird vorteilhaft ein O-Ring eingesetzt, da dieser kostengünstig, leicht montierbar und einfach austauschbar ist.

Gemäß einer Weiterbildung der Erfindung weist der Verschlussstopfen eine von außerhalb des Gehäuses zugängliche Handhabe oder Werkzeugaufnahme auf. In einfachster Form ist als eine solche Handhabe, zum Beispiel ein Griff vorgesehen, der mit zwei Fingern gefasst werden kann, so dass der Verschlussstopfen ohne Werkzeug entfernt und eingebaut werden kann. Soll hingegen die Entfernung nur durch Fachpersonal möglich sein, so ist es zweckmäßig, den Verschlusskörper mit einer Werkzeugaufnahme auszubilden, so dass ein Entfernen nur mit dem entsprechenden Werkzeug möglich ist.

Die Gehäuseöffnung ist mit einem umlaufenden nach außen ragenden Kragen versehen, welcher den Verschlussstopfen außerhalb des Gehäuses umfangsseitig umgibt. Ein solcher trichterförmiger Kragen hat zum einen den Vorteil, dass bei entferntem Verschlussstopfen die Flüssigkeit, insbesondere Wasser direkt über diese Öffnung in das Gehäuse eingefüllt werden kann, ohne dass weitere Hilfsmittel wie Trichter oder Einfüllhilfen verwendet werden müssen. Weiterhin ermöglicht ein nach außen ragender umlaufender Kragen, dass beim Öffnen des Verschlussstopfens, und zwar beim Überführen von der geschlossenen Stellung in die Stellung, in der ein Bypass gebildet ist, der Verschlussstopfen jedoch noch fest und sicher innerhalb der Öffnung gehalten ist, ein Druckausgleich im Bereich zwischen Verschlussstopfen und diesem Kragen erfolgt, so dass etwaige austretende Flüssigkeit durch den Kragen gerichtet umfänglich des Verschlussstopfens austritt und nicht quer dazu.

Im Verschlusskörper ist, vorzugsweise am Außenumfang des Verschlussstopfens, ein Überströmkanal vorgesehen, der in einer Zwischenstellung freigegeben ist, in welcher der Verschlusskörper noch mechanisch in der Gehäuseöffnung befestigt ist, die Dichtung des Verschlusskörpers jedoch nicht mehr wirksam ist. Ein solcher Überströmkanal als Bypass ist besonders vorteilhaft, da der Druckabbau hier noch gerichteter möglich ist und insbesondere wenn heiße oder aggressive Flüssigkeit anstehen, eine Gesundheitsgefährdung bei geeigneter Handhabung vermieden werden kann.

Konstruktiv und handhabungstechnisch besonders vorteilhaft ist es, wenn die Gehäuseöffnung fluchtend zu dem Kanalabschnitt angeordnet ist, welcher den Dichtkörper aufnimmt. Dann nämlich ist zum einen der Dichtsitz innerhalb des Kanals von außen gut zugänglich, zumindest mit einem Instrument, das bis zum Dichtsitz reicht. Andererseits kann die Halterung gradlinig und konstruktiv einfach ausgebildet werden.

Grundsätzlich ist die Kanalform frei wählbar. Besonders vorteilhaft ist es jedoch, wenn der den Dichtkörper aufnehmende Kanalabschnitt einen kreisrunden Querschnitt hat und abgesetzt ausgebildet ist, da dann die abgesetzte Fläche des Absatzes als Anschlag für den Dichtkörper und/oder als Dichtfläche genutzt werden kann. Vorzugsweise bildet allerdings eine radiale Fläche des Absatzes die Dichtfläche, da dann mit einem kostengünstigen und zuverlässigen O-Ring als Dichtung gearbeitet werden kann.

Der Dichtkörper weist einen Tragkörper auf, der eine umlaufende Nut hat, in der der eigentliche Dichtring eingegliedert ist, der vorzugsweise als O-Ring ausgebildet ist.

Um den Tragkörper einerseits präzise zu führen, andererseits jedoch die Führungsmittel einfach und kostengünstig ausgestalten zu können, ist der Tragkörper über den Dichtsitz hinaus verlängert und dort in Verbindung mit dem Kanal als Führung für den Dichtkörper ausgebildet. Der Tragkörper weist in diesem Bereich also vorteilhaft zwei, drei oder mehr rippenförmige Gebilde auf, die an der Kanalwandung gleitend anliegen und dadurch eine sichere Abstützung und Führung bilden.

Halterungsseitig hingegen ist es vorteilhaft, wenn der Dichtkörper am Ende von Führungsstangen sitzt, die in einer Aufnahme der Halterung axial bewegbar angeordnet sind. Die Führungsstangen werden erfindungsgemäß durch drei Führungs- und Rastschenkel und die Aufnahme wird durch einen Ring gebildet, der eine Axialbewegung zulässt.

Um auch im drucklosen Zustand einen Durchfluss in Sperrrichtung des Ventils zuverlässig zu vermeiden, ist der Dichtkörper in Schließrichtung federkraftbeaufschlagt. Hierzu sind zwischen Dichtkörper und Aufnahme ein oder mehrere Schraubenfedern vorgesehen. Besonders einfach und zuverlässig erfolgt dies durch eine die Führungs- und Rastschenkel umgebende Schraubenfeder, welche zwischen Dichtkörper einerseits und Aufnahme andererseits vorgespannt eingegliedert ist.

Sowohl konstruktiv als auch handhabungstechnisch ist es vorteilhaft, wenn der Kanal zum Ventilausgang abgewinkelt verläuft und schräg oder quer zu einer gemeinsamen Längsachse von Verschlusskörper und Dichtkörper gerichtet ist. Eine solche Anordnung ist nicht nur besonders vorteilhaft zur Integration in das Hauswasserwerk, sondern auch für ein Pumpen- oder Ventilgehäuse.

Das Hauswasserwerk mit einer ein- oder mehrstufigen elektromotorisch angetriebenen Kreiselpumpe weist vorzugsweise einen Eingangsanschluss, der mit der Saugseite der Pumpe leitungsverbunden ist und einen Ausgansanschluss, der mit der Druckseite der Pumpe leitungsverbunden ist, auf. Das Rückschlagventil ist dabei gemäß der Erfindung zwischen Ausgangsanschluss und Druckseite der Pumpe eingegliedert, wie dies von der Anordnung her grundsätzlich zum Stand der Technik zählt. Besonders vorteilhaft ist es hierbei jedoch, dass bei Verwendung des erfindungsgemäßen Rückschlagventils mehrere Funktionen in diesem Ventil vereint werden. So besteht zum einen die Möglichkeit, das Ventil mit wenigen Handgriffen zu demontieren, zu prüfen und zu warten. Es besteht weiterhin die Möglichkeit nach Entfernen des Dichtkörpers durch die Gehäuseöffnung für den Verschlusskörper Flüssigkeit in das Hauswasserwerk einzufüllen, eine gesonderte Öffnung hierfür ist somit entbehrlich. Schließlich ist über den Verschlusskörper eine vorherige Druckentlastung sowohl druckseitig als auch saugseitig möglich, wenn beispielsweise eine mehrstufige Verbindung zwischen Verschlusskörper und Gehäuseöffnung Verwendung findet, wie sie weiter oben beschrieben ist.

Dabei ist die Anordnung vorteilhaft so, dass die Gehäuseöffnung für den Verschlusskörper an einer Oberseite des Gehäuses des Hauswasserwerks angeordnet ist und der Ausgansanschluss des Hauswasserwerkes an einer Seite quer dazu. Dies kommt der bevorzugten Kanalanordnung des Ventils entgegen und ermöglicht zudem eine besonders vorteilhafte Konstruktion des Hauswasserwerks.

Zweckmäßigerweise ist der Ausgangsanschluss über dem Eingangsanschluss und dieser über eine durch einen lösbaren Verschluss verschlossenen Ablassöffnung angeordnet. Diese Anordnung ist besonders vorteilhaft, da alle hydraulischen Zugangsöffnungen an einer Seite des Hauswasserwerks sind und lediglich die Gehäuseöffnung für den Verschlusskörper oben liegt also in der Regel dort, wo das Hauswassserwerk im Betrieb gut zugänglich ist.

Konstruktiv besonders günstig ist es, wenn im Hauswasserwerk die Pumpe liegend, das heißt mit horizontaler Drehachse angeordnet ist. Der Saugraum der Pumpe ist dabei vorteilhaft so angeordnet, dass in diesen der Eingangsanschluss und/oder die Ablassöffnung münden. Es versteht sich, dass die Ablassöffnung möglichst tief angeordnet ist, um das Wasser zum Beispiel im Winter zur Gewährleistung der Frostsicherheit möglichst vollständig ablassen zu können.

Entsprechend kann zur Wiederherstellung der Betriebssituation nach Verschließen der Ablassöffnung und Entfernen des Verschlusskörpers und des damit in Verbindung stehenden Dichtkörpers von oben das Hauswasserwerk wieder soweit mit Wasser gefüllt werden, dass ein Selbstansaugeffekt mit Einschalten der Pumpe nach Einsetzen von Dichtkörper und Verschlusskörper eintritt.

Die Erfindung ist nachfolgend anhand eines in den Figuren dargestellten Ausführungsbeispiels näher erläutert. Es zeigen:
- Fig. 1: in stark vereinfachter schematischer Darstellung einen Längsschnitt durch ein Hauswasserwerk mit einem Rückschlagventil gemäß der Erfindung,
- Fig. 2: in vergrößerter perspektivischer Längsschnittdarstellung den rückschlagventilseitigen Teil des Hauswasserwerks,
- Fig. 3: eine Halterung mit Dichtkörper und Verschlussstopfen in vergrößerter perspektivischer Darstellung,
- Fig. 4: die Halterung gemäß Fig. 3 in Seitenansicht und
- Fig. 5: in vergrößerter perspektivischer Schnittdarstellung den Strömungsverlauf beim Öffnen des Verschlussstopfens.

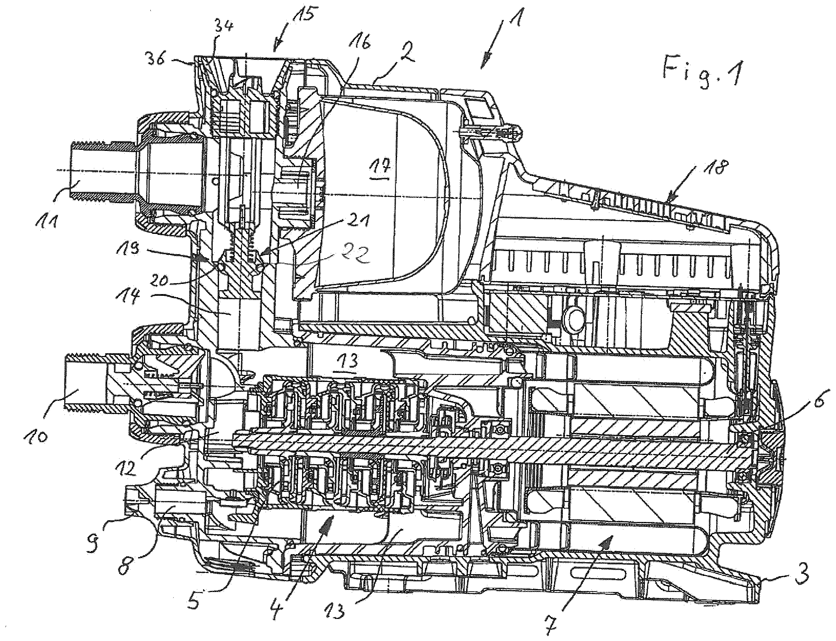

Das anhand von Fig. 1 dargestellte Hauswasserwerk 1 ist in einem geschlossenem Gehäuse 2 angeordnet, welches einen Fuß 3 aufweist, mit dem das Hauswasserwerk 1 auf den Boden steht und dort gegebenenfalls schraubbefestigt ist.

Das Hauswasserwerk 1 weist eine mehrstufige Kreiselpumpe 4 auf, welche liegend angeordnet ist, also mit horizontaler Drehachse betrieben wird. Die Laufräder 5 der Pumpe 4 sind auf einer Welle 6 angeordnet, die Teil eines Elektromotors 7 bildet, welcher die Kreiselpumpe 4 antreibt.

Das Hauswasserwerk 1 weist an der in Fig. 1 linken Seite nahe seiner Aufstandsfläche eine Ablassöffnung 8 auf, die durch einen Verschluss 9 abgeschlossen ist. Über der Ablassöffnung 8 ist ein Eingangsanschluss 10 angeordnet, mit deutlichem Abstand über dem Eingangsanschluss 10 ist ein Ausgangsanschluss 11 vorgesehen. Der Eingangsanschluss 10 mündet innerhalb des Gehäuses 2 des Hauswasserwerks 1 in einen Saugraum 12 der Kreiselpumpe 4. Die über den Eingangsanschluss 10 in das Hauwasserwerk 1 eintretende Flüssigkeit gelangt in den Saugraum 12, von wo sie die Laufräder 5 mit den umfänglich daran angeordneten Leitapparaten, die jeweils eine Pumpenstufe bilden, durchläuft, bis sie aus der letzten Pumpenstufe austritt und in einen Ringkanal 13 mündet, welcher die Pumpenstufen der Kreiselpumpe 4 umgibt.

Dieser Ringkanal 13 ist unterhalb der Pumpen mit der Ablassöffnung 8 verbunden und mündet oberhalb der Pumpe in einen Kanal 14, der endseitig (nach oben in Fig. 1) offen ausgebildet und durch einen Verschlussstopfen 15 verschlossen werden kann. In diesen Kanal 14 mündet unterhalb des Verschlussstopfens 15 und quer dazu der Ausgangsanschluss 11, über welchen die Flüssigkeit das Hauwasserwerk 1 verlässt. Um 180° versetzt hierzu mündet in den Kanal 14 ein Anschluss 16, an dem ein Membrandruckbehälter 17 als Druckspeicher und Ausgleichsgefäß angebracht ist. An die Rückseite dieses Membrandruckbehälters 17 schließt ein in das Gehäuse 2 integriertes Elektronikgehäuse 18 an, welches über dem Elektromotor 7 angeordnet ist und die gesamte Steuer- und Regelelektronik des Hauwasserwerks 1 bildet.

Innerhalb des Kanals 14 ist ein Rückschlagventil 19 eingegliedert, dessen Dichtsitz 20 durch einen Absatz gebildet ist, der dadurch entsteht, dass der in Fig. 1 untere Teil des Kanals 4 im Bereich des Dichtsitzes 20 schräg nach oben laufend zu dem im Durchmesser größeren oberen Teil des Kanals 14 aufgeweitet ist. In dem dargestellten Ausführungsbeispiel ist der Dichtsitz durch eine fasenähnliche Schrägfläche gebildet. Das Gegenstück ist durch einen Dichtkörper 21 gebildet, welcher einen Tragkörper 22 mit einer umlaufenden Nut aufweist, in der ein Dichtring 23 in Form eines O-Rings angeordnet ist, welcher die eigentliche Abdichtung zum Dichtsitz 20 herstellt.

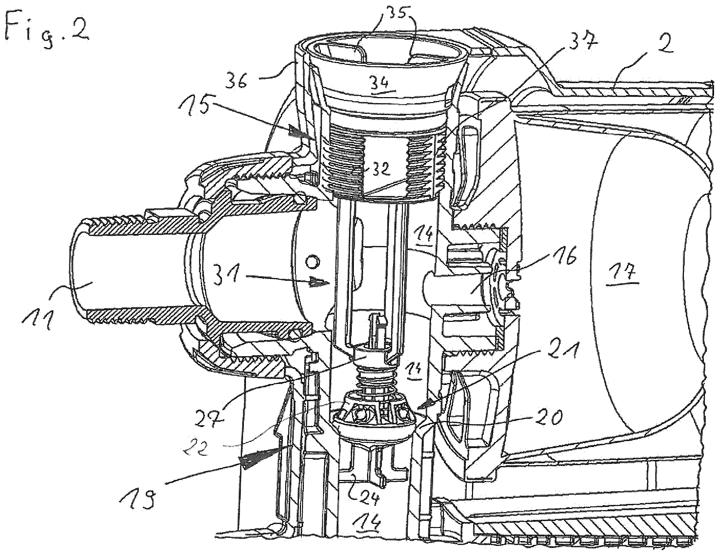

Der Tragkörper 22 ist in Fig. 1 nach unten hin, also dort wo der verjüngte Teil des Kanals 14 befindlich ist, durch vier, im Querschnitt kreuzförmig angeordnete Schenkel 24 verlängert, die zum freien Ende hin radial aufgeweitet ausgebildet sind und dort Führungsflächen 25 bilden, mit denen der Tragkörper 22 innerhalb des Kanals 14 axial beweglich geführt ist. Zur anderen Seite, also in den Fig. 1 bis 5 nach oben hin, weist der Tragkörper 22 drei Führungs- und Rastschenkel 26 auf, mit denen der Tragkörper 22 axial bewegbar innerhalb einer Aufnahme 27 angeordnet und geführt ist, welche durch einen Ring 27 gebildet ist. Die Führungs- und Rastschenkel 26 sind stabförmig ausgebildet und weisen an ihren freien Enden Rastnasen 28 auf, so dass die Schenkel 26 beim Einschieben in die Aufnahme 27 mit den Rastnasen 28 am Ende einfedem und nach Durchfahren der Aufnahme 17 aufweiten und ausfedern. Dann ist der Tragkörper 22 axial bewegbar, jedoch ansonsten formschlüssig innerhalb der Aufnahme 27 gehalten ist. Die radialen Au-ßenseiten der Führungs- und Rastschenkel 26 bilden zusammen mit der radialen Innenseite der Aufnahme 27 eine Führung für den Tragkörper 22 bei seiner axialen Bewegung.

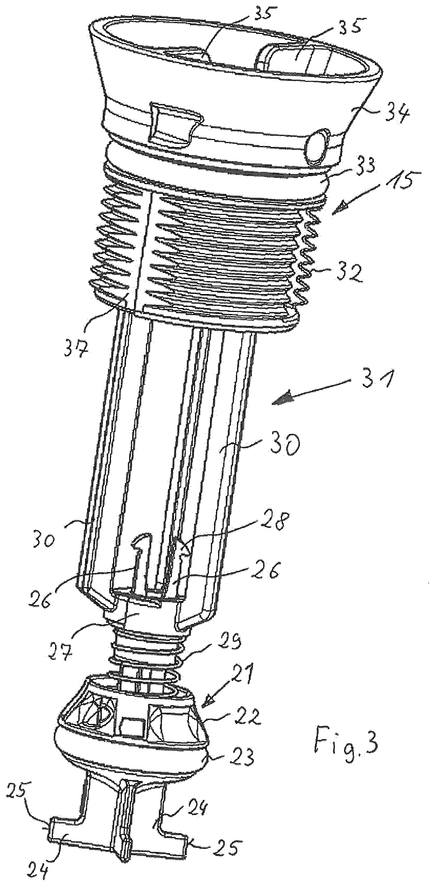

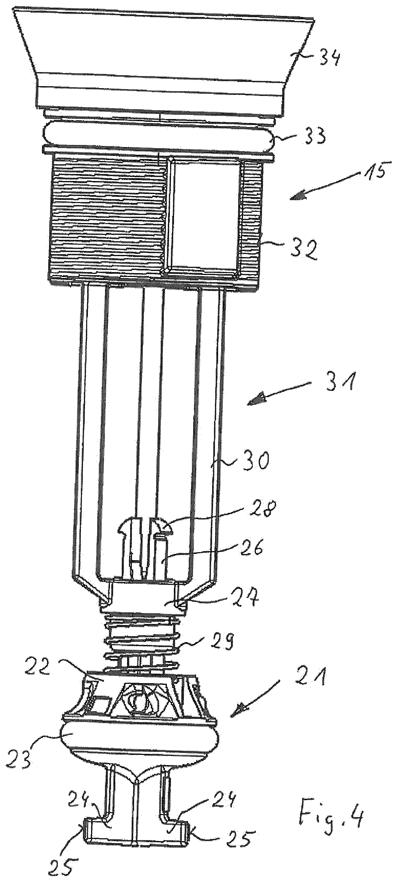

Wie aus den Figuren ersichtlich, ist der Tragkörper 22 unter Eingliederung einer Schraubenfeder 29 in der Aufnahme 27 eingegliedert, welche vorgespannt ist und den Tragkörper 22 gegenüber der Aufnahme 27 kraftbeaufschlagt, so dass im nicht eingebauten Zustand die Rastnasen 28 an einer Seite der Aufnahme 27 anliegen (in den Fig. 3 und 4 ist diese Stellung zur besseren Darstellung der Führungs- und Rastschenkel 26 mit den Rastnasen 28 nicht gezeigt). Diese Feder 29 stellt sicher, dass das Rückschlagventil 19 auch im drucklosen Zustand in der in Fig. 1 dargestellten geschlossenen Stellung verbleibt, in welcher der Kanal 14 abgesperrt ist.

Die Aufnahme 27 sitzt an einem Ende einer aus drei Stäben 30 gebildeten Halterung 31, die an einer Seite axial beweglich den Dichtkörper 21 und an der anderen Seite fest und unbeweglich den Verschlussstopfen 15 trägt.

Der Verschlussstopfen 15 ist im Wesentlichen zylinderförmig ausgebildet, weist ein Außengewinde 32 auf, mit dem er in einem entsprechenden Innengewinde am Ende des Kanals 14 einschraubbar ist. Die Stäbe 30 der Halterung 31 sind an einer in den Figuren unteren Stirnseite einer Querwand befestigt, darüber hinaus ist am oberen Ende des Gewindes eine obere Querwand vorgesehen. In dem Bereich der oberen Querwand weist der Verschlussstopfen 15 eine umlaufende Nut auf, in der ein O-Ring 33 eingegliedert ist, welcher für den dichten Verschluss sorgt, wenn der Stopfen 15 vollständig eingeschraubt ist. An die Nut für den O-Ring 33 schließt sich ein Kragen 34 zur gewindefernen Seite an, welcher leicht aufgeweitet ausgebildet ist und an dem innenseitig zwei Schenkel 35 angeformt sind, die auch mit der oberen Querwand verbunden sind und die als Handhabe dienen, um den Verschlussstopfen 15 ein- oder auszuschrauben. Parallel zu dem Kragen 34 des Verschlussstopfens 15 ist gehäuseseitig ein Kragen 36 am oberen Ende des Kanals 14 vorgesehen.

Das Außengewinde 32 ist durch senkrechte Einschnitte 37 unterbrochen, welche einen Bypass also einen Überströmkanal bilden zwischen dem Druckraum des Ausgangsanschlusses 11 und der Umgebung.

Im Betrieb ist der Verschlussstopfen 15 dicht und fest in der entsprechenden Gewindeaufnahme am oberen Ende des Kanals 14 des Gehäuses 2 eingeschraubt, der O-Ring 33 bildet einen dichten Abschluss. Über die Halterung 31 ist der Dichtkörper 21 in den Kanal 14 eingebracht, wobei der Dichtkörper 21 mit seinem Dichtring 23 am Dichtsitz 20 anliegt und durch die Kraft der Schraubendruckfeder 29 in dieser Stellung gehalten wird. Hierdurch ist das Rückschlagventil 19 gebildet, das den Rückfluss vom Ausgangsanschluss 11 zum Eingangsanschluss 10 sperrt. Erst bei Erreichen eines gewissen Drucks, welcher über dem Druck im Membrandruckbehälter 17 bzw. im Ausgangsanschluss 11 liegt, öffnet das Rückschlagventil 19 entgegen Federkraft und gibt die hydraulischen Verbindung zwischen dem Ringkanal 13 und dem Ausgangsanschluss 11 frei.

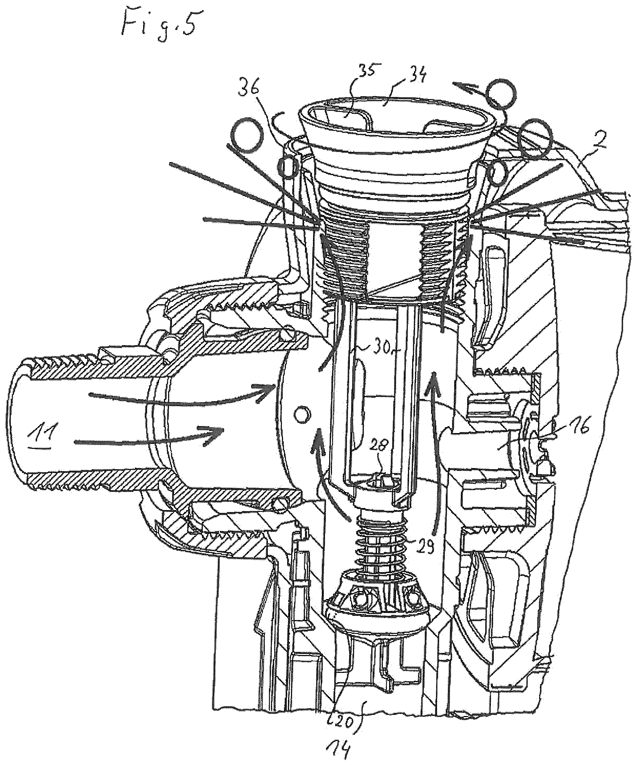

Wenn, was bei abgeschalteter Pumpe üblich ist, der Eingangsanschluss 10 drucklos ist, jedoch am Ausgangsanschluss 11 noch der Förderdruck ansteht, verhindert das Rückschlagventil 19 einen Druckausgleich. Wird dann der Verschlussstopfen 15 herausgedreht, so gelangt dieser zunächst in eine Stellung, in welcher der Dichtring 33 außer Anlage an der Gehäuseöffnung kommt, so dass über die Einschnitte 37 im Außengewinde 32 ein Bypass gebildet wird, welcher den Druckraum innerhalb des Hauwasserwerkes mit der Außenumgebung verbindet. Diese Stellung ist in Fig. 5 dargestellt, dort ist auch dargestellt, wie dieser Druck, sei es durch Flüssigkeitsströmung (Pfeile) oder durch Gasfreisetzung (Gasblasen) entweicht, ohne dass eine Gefahr für die Bedienperson besteht. Durch die eng ineinander greifenden Kragen 34 und 36 wird verhindert, dass ein gerichteter Strahlaustritt erzeugt wird, Gas entweicht vielmehr frei nach oben, Flüssigkeit durch den gebildeten Spalt zwischen den Kragen 34 und 36.

Wird dann der Verschlussstopfen 15 weiter herausgedreht, so hebt auch der Dichtkörper 21 vom Dichtsitz 20 ab, so dass ein hydraulischer Druckausgleich zwischen Eingangsanschluss 10 und Ausgangsanschluss 11 gebildet ist.

Nach Entfernen des Verschlussstopfens 15 kann die Funktion des Rückschlagventils 19 dichtkörperseitig überprüft werden, es kann gegebenenfalls der Dichtring 23 ausgetauscht werden. Auch kann der Dichtsitz 20 durch Einführen eines entsprechenden Werkezuges gereinigt oder bearbeitet werden. Da mit Entfernen des Stopfens 15 über die Halterung 31 auch der Dichtkörper 21 entfernt wird, kann dann das zur Erzeugung eines Selbstansaugungseffektes erforderliche Wasser in das Hauwasserwerk 1 eingefüllt werden. Da der Dichtkörper 21 entfernt und somit die Funktion des Rückschlagventils 19 außer Funktion gesetzt worden ist, kann das Einfüllen des Wassers durch die sonst durch den Verschlussstopfen 15 verschlossene Öffnung an der Oberseite des Gehäuses 2 erfolgen. Es ist also nicht erforderlich, eine gesonderte Einfüllöffnung vor dem Rückschlagventil 19 vorzusehen, welche erforderlich wäre, wenn das Rückschlagventil 19 in Funktion wäre.

### Bezugszeichenliste

- 1: - Hauwasserwerk
- 2: - Gehäuse
- 3: - Fuß des Gehäuses
- 4: - Kreiselpumpe
- 5: - Laufräder
- 6: - Welle
- 7: - Elektromotor
- 8: - Ablassöffnung
- 9: - Verschluss für 8
- 10: - Eingangsanschluss
- 11: - Ausgangsanschluss
- 12: - Saugraum der Pumpe
- 13: - Ringkanal
- 14: - Kanal
- 15: - Verschlussstopfen
- 16: - Anschluss für Membrandruckbehälter
- 17: - Membrandruckbehälter
- 18: - Elektronikgehäuse
- 19: - Rückschlagventil
- 20: - Dichtsitz
- 21: - Dichtkörper
- 22: - Tragkörper
- 23: - Dichtring
- 24: - Schenkel
- 25: - Führungsflächen von 24
- 26: - Führungs- und Rastschenkel
- 27: - Aufnahme
- 28: - Rastnasen an 26
- 29: - Schraubendruckfeder
- 30: - Stäbe
- 31: - Halterung
- 32: - Außengewinde von 15
- 33: - O-Ring von 15
- 34: - Kragen von 15
- 35: - Schenkel
- 36: - Kragen an 2
- 37: - Einschnitte für Bypass/ Überströmkanal

## Patentansprüche

1. Hauswasserwerk (1) oder Pumpe mit einem Rückschlagventil (19), welches in einen Strömungskanal (14) des Hauswasserwerks (1) oder der Pumpe oder eines Ventilgehäuses eingegliedert ist und welches einen bewegbar innerhalb des Kanals (14) gelagerten Dichtkörper (21) aufweist, der in einer ersten Stellung, welche die Schließstellung bildet, den Kanal (14) absperrt, der in einer zweiten Stellung, welche die geöffnete Stellung bildet, den Kanal (14) freigibt,
wobei der Dichtkörper (21) an einer Halterung (31) bewegbar angeordnet ist, die einen Verschlussstopfen (15) aufweist, mit der die Halterung (31) in einer Gehäuseöffnung lösbar festgelegt ist,
wobei
eine Dichtung (33) zwischen Gehäuseöffnung und Verschlussstopfen (15) vorgesehen ist,
wobei der Dichtkörper (21) weiterhin einen Tragkörper (22) mit einer umlaufenden Nut aufweist, in der ein Dichtring (23) sitzt,
wobei der Tragkörper (22) über einen Dichtsitz (20) hinaus verlängert ist und dort in Verbindung mit dem Kanal (14) eine Führung für den Dichtkörper (21) bildet, und
wobei die Gehäuseöffnung mit einem umlaufenden nach außen ragenden Kragen (36) versehen ist, welcher den Verschlussstopfen (15) außerhalb des Gehäuses (2) umfangseitig umgibt,
**dadurch gekennzeichnet, dass** im Verschlussstopfen (15) ein Überströmkanal (37) vorgesehen ist, der in einer Zwischenstellung freigegeben ist, in welcher der Verschlussstopfen (15) noch mechanisch in der Gehäuseöffnung befestigt ist, die Dichtung (33) des Verschlussstopfens jedoch nicht mehr wirksam ist,
dass der Tragkörper (22) drei Führungs- und Rastschenkel (26) aufweist, mit denen der Tragkörper (22) axial bewegbar innerhalb einer Aufnahme (27) angeordnet und geführt ist, welche durch einen Ring gebildet ist, wobei die Führungs- und Rastschenke (26) stabförmig ausgebildet sind und an ihren freien Enden Rastnasen (28) aufweisen, so dass die Führungs- und Rastschenkel (26) beim Einschieben in die Aufnahme (27) mit den Rastnasen (28) am Ende einfedern und nach Durchfahren der Aufnahme (17) aufweiten und ausfedern, und
dass der Tragkörper (22) unter Eingliederung einer Schraubenfeder (29) in der Aufnahme (27) eingegliedert ist, wobei die Schraubenfeder (29) vorgespannt ist und den Tragkörper (22) gegenüber der Aufnahme (27) kraftbeaufschlagt, so dass im nicht eingebauten Zustand die Rastnasen (28) an einer Seite der Aufnahme (27) anliegen.

2. Hauswasserwerk oder Pumpe nach Anspruch 1, **dadurch gekennzeichnet, dass** die Halterung (31) an einem Ende den Verschlussstopfen (15) und am anderen Ende den Dichtkörper (21) aufweist.

3. Hauswasserwerk oder Pumpe nach einem der vorhergehenden Ansprüche, **dadurch gekennzeichnet, dass** eine Gewinde- oder Bajonettverbindung (32) zwischen Verschlussstopfen (15) und Gehäuseöffnung vorgesehen ist.

4. Hauswasserwerk oder Pumpe nach einem der vorhergehenden Ansprüche, **dadurch gekennzeichnet, dass** die Dichtung (33) zwischen Gehäuseöffnung und Verschlussstopfen (15) ein O-Ring (33) ist.

5. Hauswasserwerk oder Pumpe nach einem der vorhergehenden Ansprüche, **dadurch gekennzeichnet, dass** der Verschlussstopfen (15) eine von außerhalb des Gehäuses (2) zugängliche Handhabe (35) oder Werkzeugaufnahme aufweist.

6. Hauswasserwerk oder Pumpe nach einem der vorhergehenden Ansprüche, **dadurch gekennzeichnet, dass** am Außenumfang des Verschlussstopfens (15) der Überströmkanal (37) vorgesehen ist.

7. Hauswasserwerk oder Pumpe nach einem der vorhergehenden Ansprüche, **dadurch gekennzeichnet, dass** die Gehäuseöffnung fluchtend zu dem Kanalabschnitt (14) angeordnet ist, welcher den Dichtkörper (21) aufnimmt.

8. Hauswasserwerk oder Pumpe nach einem der vorhergehenden Ansprüche, **dadurch gekennzeichnet, dass** der den Dichtkörper (21) aufnehmende Kanalabschnitt (14) einen kreisrunden Querschnitt hat und abgesetzt ausgebildet ist, wobei die abgesetzte Fläche des Absatzes einen Anschlag für den Dichtkörper und/oder die radiale Fläche des Absatzes die Dichtfläche bildet.

9. Hauswasserwerk oder Pumpe nach einem der vorhergehenden Ansprüche, **dadurch gekennzeichnet, dass** der Dichtring (23) ein O-Ring (23) ist.

10. Hauswasserwerk oder Pumpe nach einem der vorhergehenden Ansprüche, **dadurch gekennzeichnet, dass** der Dichtkörper (21) am Ende der Führungs- und Rastschenkel (26) sitzt.

11. Hauswasserwerk oder Pumpe nach einem der vorhergehenden Ansprüche, **dadurch gekennzeichnet, dass** der Dichtkörper (21) in Schließrichtung federkraftbeaufschlagt ist.

12. Hauswasserwerk oder Pumpe nach einem der vorhergehenden Ansprüche, **dadurch gekennzeichnet, dass** Z die Schraubenfeder (29) zwischen Dichtkörper (21) und Aufnahme (27) angeordnet ist und vorzugsweise die Führungs- und Rastschenkel (26) umgibt.

13. Hauswasserwerk oder Pumpe nach einem der vorhergehenden Ansprüche, **dadurch gekennzeichnet, dass** der Kanal (14) zum Ventilausgang hin abgewinkelt verläuft und schräg oder quer zu einer gemeinsamen Längsachse von Verschlussstopfen (15) und Dichtkörper (21) gerichtet ist.

14. Hauswasserwerk nach einem der vorhergehenden Ansprüche, **dadurch gekennzeichnet, dass** es eine ein- oder mehrstufige elektromotorisch angetriebene Kreiselpumpe (4), einen Eingangsanschluss (10), der mit der Saugseite der Pumpe (4) leitungsverbunden ist, und einen Ausgangsanschluss (11), der mit der Druckseite der Pumpe (4) leitungsverbunden ist, aufweist, wobei das Rückschlagventil (19) zwischen Ausgangsanschluss (11) und der Druckseite der Pumpe (4) eingegliedert ist.

15. Hauswasserwerk nach Anspruch 14, **dadurch gekennzeichnet, dass** die Gehäuseöffnung für den Verschlussstopfen (15) an einer Oberseite des Gehäuses (2) des Hauswasserwerks (1) angeordnet ist und dass der Ausgangsanschluss (11) an einer Seite quer dazu angeordnet ist.

16. Hauswasserwerk nach Anspruch 14 oder 15, **dadurch gekennzeichnet, dass** der Ausgangsanschluss (11) über dem Eingangsanschluss (10) und dieser über eine durch
einen lösbaren Verschluss (9) verschlossenen Ablassöffnung (8) angeordnet ist.

17. Hauswasserwerk nach Anspruch 16, **dadurch gekennzeichnet, dass** die Pumpe (4) liegend, das heißt mit horizontaler Drehachse angeordnet ist und einen Saugraum (12) aufweist, in den der Eingangsanschluss (10) sowie die Ablassöffnung (8) münden.

18. Hauswasserwerk nach einem der vorhergehenden Ansprüche, **dadurch gekennzeichnet, dass** der Verschlussstopfen (15) eine Gehäuseöffnung verschließt, über welche Flüssigkeit für ein Selbstansaugen der Pumpe (4) zuführbar ist.

## Claims

1. A domestic waterworks (1) or pump having a non-return valve (19), which is integrated into a flow channel (14) of the domestic waterworks (1) or the pump or a valve housing and which has a sealing element (21), which is mounted in a movable manner inside the channel (14) and which in a first position, which forms the closed position, shuts the channel (14) and which in a second position, which forms the open position, opens the channel (14),
the sealing element (21) being arranged in a movable manner on a holder (31), which has a plug (15), using which the holder (31) is fastened in a housing opening in a detachable manner,
a seal (33) being provided between housing opening and plug (15),
the sealing element (21) furthermore having a supporting body (22) with a circumferential groove, in which a sealing ring (23) sits, the supporting body (22) being extended beyond a sealing seat (20) and forming a guide for the sealing body (21) there in connection with the channel (14), and
the housing opening being provided with a circumferential outwardly protruding collar (36), which surrounds the plug (15) outside the housing (2) on the circumferential side,
**characterized in that** an overflow channel (37) is provided in the plug (15), which overflow channel is open in an intermediate position in which the plug (15) is still mechanically fastened in the housing opening, but the seal (33) of the plug is no longer effective,
**in that** the supporting body (22) has three guiding and latching legs (26), using which the supporting body (22) is arranged and guided in an axially movable manner inside a receptacle (27) which is formed by a ring, wherein the guiding and latching legs (26) are formed in a rod-shaped manner and have latches (28) at their free ends, so that the latches (28) at the end of the guiding and latching legs (26) deflect during insertion into the receptacle (27) and widen and rebound after passing through the receptacle (17), and
**in that** the supporting body (22) is integrated in the receptacle (27) with the integration of a coil spring (29), wherein the coil spring (29) is preloaded and loads the supporting body (22) with force with respect to the receptacle (27), so that in the non-installed state, the latches (28) bear against one side of the receptacle (27).

2. The domestic waterworks or pump according to claim 1, **characterized in that** the holder (31) has the plug (15) at one end and the sealing element (21) at the other end.

3. The domestic waterworks or pump according to one of the preceding claims, **characterized in that** a threaded or bayonet connection (32) is provided between plug (15) and housing opening.

4. The domestic waterworks or pump according to one of the preceding claims, **characterized in that** the seal (33) between housing opening and plug (15) is an O-ring (33).

5. The domestic waterworks or pump according to one of the preceding claims, **characterized in that** the plug (15) has a handle (35) or tool receptacle which is accessible from outside the housing (2).

6. The domestic waterworks or pump according to one of the preceding claims, **characterized in that** the overflow channel (37) is provided on the outer circumference of the plug (15).

7. The domestic waterworks or pump according to one of the preceding claims, **characterized in that** the housing opening is arranged flush to the channel section (14) which accommodates the sealing element (21).

8. The domestic waterworks or pump according to one of the preceding claims, **characterized in that** the channel section (14) which accommodates the sealing element (21) has a circular cross section and is formed in an offset manner, wherein the offset surface of the shoulder forms a stop for the sealing element and/or the radial surface of the shoulder forms the sealing surface.

9. The domestic waterworks or pump according to one of the preceding claims, **characterized in that** the sealing ring (23) is an O-ring (23).

10. The domestic waterworks or pump according to one of the preceding claims, **characterized in that** the sealing element (21) sits at the end of the guiding and latching legs (26).

11. The domestic waterworks or pump according to one of the preceding claims, **characterized in that** the sealing element (21) is spring-loaded in the closing direction.

12. The domestic waterworks or pump according to one of the preceding claims, **characterized in that** the coil spring (29) is arranged between sealing element (21) and receptacle (27) and preferably surrounds the guiding and latching legs (26).

13. The domestic waterworks or pump according to one of the preceding claims, **characterized in that** the channel (14) runs in an angled manner towards the valve outlet and is directed obliquely or transversely to a common longitudinal axis of plug (15) and sealing element (21).

14. The domestic waterworks according to one of the preceding claims, **characterized in that** the domestic waterworks has one single- or multistage electromotively driven centrifugal pump (4), an inlet connection (10) which is line-connected to the suction side of the pump (4), and an outlet connection (11) which is line-connected to the pressure side of the pump (4), wherein the non-return valve (19) is integrated between outlet connection (11) and the pressure side of the pump (4).

15. The domestic waterworks according to claim 14, **characterized in that** the housing opening for the plug (15) is arranged on an upper side of the housing (2) of the domestic waterworks (1) and **in that** the outlet connection (11) is arranged on a side which is transverse thereto.

16. The domestic waterworks according to claim 14 or 15, **characterized in that** the outlet connection (11) is arranged above the inlet connection (10) and this is arranged above an outlet opening (8) which is closed by a detachable closure (9).

17. The domestic waterworks according to claim 16, **characterized in that** the pump (4) is arranged to be lying, that is to say with a horizontal axis of rotation, and has a suction chamber (12), into which the inlet connection (10) and the outlet opening (8) open.

18. The domestic waterworks according to one of the preceding claims, **characterized in that** the plug (15) closes a housing opening, via which liquid can be supplied for self-priming the pump (4).

## Revendications

1. Installation d'eau domestique (1) ou pompe avec une soupape antiretour (19), laquelle est incorporée dans un conduit d'écoulement (14) de l'installation d'eau domestique (1) ou de la pompe ou d'un boîtier de soupape et laquelle comporte un corps d'étanchéité (21) logé pouvant se déplacer à l'intérieur du conduit (14), qui dans une première position, formant la position de fermeture, ferme le conduit (14), qui dans une deuxième position formant la position ouverte, libère le conduit (14),
sachant que le corps d'étanchéité (21) est disposé pouvant se déplacer sur un support (31), qui comporte un bouchon de fermeture (15) avec lequel le support (31) est fixé de façon amovible dans une ouverture de boîtier,
sachant qu'un joint d'étanchéité (33) est prévu entre l'ouverture de boîtier et le bouchon de fermeture (15),
sachant que le corps d'étanchéité (21) comporte en plus un corps de support (22) avec une rainure périphérique dans laquelle vient se loger une bague d'étanchéité (23),
sachant que le corps de support (22) est prolongé au-delà d'un siège d'étanchéité (20) et y forme un guidage pour le corps d'étanchéité (21) en liaison avec le conduit (14), et
sachant que l'ouverture de boîtier est dotée d'une collerette (36) périphérique faisant saillie vers l'extérieur, laquelle entoure sur la périphérie le bouchon de fermeture (15) en dehors du boîtier (2), **caractérisée en ce qu'**un conduit de décharge (37) est prévu dans le bouchon de fermeture (15), qui est libéré dans une position intermédiaire dans laquelle le bouchon de fermeture (15) est encore fixé mécaniquement dans l'ouverture de boîtier, le joint d'étanchéité (33) du bouchon de fermeture n'étant toutefois plus actif,
**en ce que** le corps de support (22) comporte trois branches de guidage et d'encliquetage (26) avec lesquelles le corps de support (22) est disposé et guidé de façon axialement mobile à l'intérieur d'un logement (27), lequel est formé par une bague, sachant que les branches de guidage et d'encliquetage (26) sont constituées en forme de tige et comportent des ergots d'encliquetage (28) à leurs extrémités libres de telle manière que les branches de guidage et d'encliquetage (26) se compriment élastiquement à l'extrémité lors de l'engagement dans le logement (27) avec les ergots d'encliquetage (28) et s'écartent et se détendent après le passage du logement (17), et
**en ce que** le corps de support (22) est incorporé dans le logement (27) par incorporation d'un ressort hélicoïdal (29), sachant que le ressort hélicoïdal (29) est précontraint et sollicite en force le corps de support (22) par rapport au logement (27) de telle manière qu'à l'état non monté, les ergots d'encliquetage (28) viennent s'appliquer sur un côté du logement (27).

2. Installation d'eau domestique ou pompe selon la revendication 1, **caractérisée en ce que** le support (31) comporte le bouchon de fermeture (15) à une extrémité et le corps d'étanchéité (21) à l'autre extrémité.

3. Installation d'eau domestique ou pompe selon l'une quelconque des revendications précédentes, **caractérisée en ce qu'**une liaison filetée ou à baïonnette (32) est prévue entre le bouchon de fermeture (15) et l'ouverture de boîtier.

4. Installation d'eau domestique ou pompe selon l'une quelconque des revendications précédentes, **caractérisée en ce que** le joint d'étanchéité (33) entre l'ouverture de boîtier et le bouchon de fermeture (15) est un joint torique (33).

5. Installation d'eau domestique ou pompe selon l'une quelconque des revendications précédentes, **caractérisée en ce que** le bouchon de fermeture (15) comporte une manette (35) ou logement d'outil accessible depuis l'extérieur du boîtier (2).

6. Installation d'eau domestique ou pompe selon l'une quelconque des revendications précédentes, **caractérisée en ce que** le conduit de décharge (37) est prévu à la périphérie extérieure du bouchon de fermeture (15).

7. Installation d'eau domestique ou pompe selon l'une quelconque des revendications précédentes, **caractérisée en ce que** l'ouverture de boîtier est disposée en alignement avec la section de conduit (14), laquelle loge le corps d'étanchéité (21).

8. Installation d'eau domestique ou pompe selon l'une quelconque des revendications précédentes, **caractérisée en ce que** la section de conduit (14) logeant le corps d'étanchéité (21) possède une section circulaire et est constituée de façon déportée, sachant que la surface déportée du déport forme une butée pour le corps d'étanchéité et/ou la surface radiale du déport forme la surface d'étanchéité.

9. Installation d'eau domestique ou pompe selon l'une quelconque des revendications précédentes, **caractérisée en ce que** la bague d'étanchéité (23) est un joint torique (23).

10. Installation d'eau domestique ou pompe selon l'une quelconque des revendications précédentes, **caractérisée en ce que** le corps d'étanchéité (21) vient se mettre en place à l'extrémité de la branche de guidage et d'encliquetage (26).

11. Installation d'eau domestique ou pompe selon l'une quelconque des revendications précédentes, **caractérisée en ce que** le corps d'étanchéité (21) est sollicité par la force de ressort en direction de fermeture.

12. Installation d'eau domestique ou pompe selon l'une quelconque des revendications précédentes, **caractérisée en ce que** le ressort hélicoïdal (29) est disposé entre le corps d'étanchéité (21) et le logement (27) et entoure de préférence les branches de guidage et d'encliquetage (26).

13. Installation d'eau domestique ou pompe selon l'une quelconque des revendications précédentes, **caractérisée en ce que** le conduit (14) passe en faisant un angle vers la sortie de soupape et est dirigé de façon oblique ou transversalement à un axe longitudinal commun du bouchon de fermeture (15) et du corps d'étanchéité (21).

14. Installation d'eau domestique selon l'une quelconque des revendications précédentes, **caractérisée en ce qu'**elle comporte une pompe centrifuge mono- ou multi-étagée entraînée par un moteur électrique (4), un raccord d'entrée (10), qui est relié par conduite au côté aspiration de la pompe (4) et un raccord de sortie (11) qui est relié par conduite au côté pression de la pompe (4), sachant que la soupape antiretour (19) est incorporée entre le raccord de sortie (11) et le côté pression de la pompe (4).

15. Installation d'eau domestique selon la revendication 14, **caractérisée en ce que** l'ouverture du boîtier pour le bouchon de fermeture (15) est disposée sur une face supérieure du boîtier (2) de l'installation d'eau domestique (1) et **en ce que** le raccord de sortie (11) est disposé sur un côté transversalement à celui-ci.

16. Installation d'eau domestique selon la revendication 14 ou 15, **caractérisée en ce que** le raccord de sortie (11) est disposé sur le raccord d'entrée (10) et celui-ci sur une ouverture de décharge (8) fermée par une fermeture amovible (9).

17. Installation d'eau domestique selon la revendication 16, **caractérisée en ce que** la pompe (4) est disposée à l'horizontale, c'est-à-dire avec un axe de rotation horizontal et comporte un espace d'aspiration (12) dans lequel débouchent le raccord d'entrée (10) et l'ouverture de décharge (8).

18. Installation d'eau domestique selon l'une quelconque des revendications précédentes, **caractérisée en ce que** le bouchon de fermeture (15) ferme une ouverture de boîtier par le biais de laquelle du liquide peut être acheminé pour un amorçage automatique de la pompe (4).
